# EUROPEAN PATENT SPECIFICATION

(11) **EP 1 620 334 B1**
(45) Date of publication and mention of the grant of the patent: **07.06.2017**
(21) Application number: 03816895.1
(22) Date of filing: 04.04.2003
(51) Int. Cl.: B65G 15/00, B66B 27/00

(54) **TRAFFIC FLOW INDICATOR FOR A PASSENGER CONVEYOR**
VERKEHRSFLUSSANZEIGE FÜR EINEN PERSONENBEFÖRDERER
INDICATEUR DE LA DENSITE DE PASSAGE SUR UN ESCALIER ROULANT

(43) Date of publication of application: 01.02.2006
(73) Proprietor: Otis Elevator Company, Farmington, CT 06032 (US)
(72) Inventor: SANSEVERO, Frank, Glastonbury, CT 06033 (US); MAJUNTKE, Carla, Bristol, CT 06010 (US); STRIPLING, Ralph, 14089 Berlin (DE); ENGELKE, Bernward, 1040 Wien (AT); SWYST, Thomas, Arlington, MA 02476 (US); MUELLER, Alexander, 90403 Nürnberg (DE)
(74) Representative: Klunker . Schmitt-Nilson . Hirsch
(86) International application number: PCT/US2003/010363
(87) International publication number: WO 2004/099040

(56) References cited:
- EP-A1- 0 621 225
- WO-A2-02/20390
- US-A- 5 431 271
- US-A- 5 482 153
- US-A- 5 782 330
- US-A- 5 923 005
- US-B1- 6 564 921

## Description

### 1. Field of the Invention.

This invention generally relates to displays for passenger conveyors. More particularly, this invention relates to a traffic flow indicator display for a passenger conveyor.

### 2. Description of the Related Art.

Passenger conveyors, such as escalators and moving walkways, typically include a plurality of steps that move along a selected path between landings. In the case of escalators, the steps move in an upward or downward direction to carry passengers between different levels within a building, for example.

It has been desirable to provide a visible indication of the direction of movement of a passenger conveyor to approaching passengers. One approach has been to include visible markings on the outer decking beneath the balustrade associate with the handrail. This approach has been used where the balustrades are not clear. Another approach has been to include the visible marking on the outside of a glass balustrade. A shortcoming to either of these approaches is that they are visible only to passengers approaching the escalator from a straight-on direction. Such indicators may be visible at other particular angles but only from limited vantage points.

Another type of indicator provided previously was to include a post or sign external to the escalator indicating a direction of traffic flow. A shortcoming of such signs is that they are not on any portion of the escalator system and can prove inconvenient to business owners, for example, who are trying to maximize their use of floor space.

There is a need for an improved display to provide individuals a visible indication of the direction of traffic flow of a passenger conveyor, such as an escalator. This invention addresses that need while avoiding the shortcomings and drawbacks of prior approaches.

US 5 431 271 A discloses an indicator device for a passenger conveying device , the indicator device being disposed on the outer deck profile of a passenger conveying device. The indicator device includes a display capable of displaying a symbol indicative of direction of operation and stopped operation of the passenger conveying device. The indicator device comprises a post attached at a lower end thereof to the outer deck and having a display housing attached at angle at an upper end of post. The electronic display is disposed in the display housing. A base is disposed on the outer deck with the post passing through an opening in the base. A transparent enclosure having upper and lower openings is disposed over the base, the post and the display housing, with the display disposed within the upper opening of the enclosure. A logic circuit interfaces with the passenger conveying device and the display to determine the symbol indicative of the operational feature of the passenger conveying device to be displayed.

US 5 482 153 A discloses an operation panel for a passenger conveying device having a balustrade comprising a key switch, a key pad, and a processor. The key switch may be actuated into a plurality of switch positions by an independent key and the keypad may be used to input data into the processor. The processor, which processes data from external inputs and the keypad, includes a programmable memory selectively accessible by password. A first level of the processor is accessible without actuating the key switch from a first switch position or entering a password into the keypad. A second level of the processor is accessible by actuating the key switch into a second switch position. A third level of the processor is accessible by actuating the key switch into the second switch

### SUMMARY OF THE INVENTION

In general terms, this invention is a display that provides traffic flow information indicating a direction of movement of a passenger conveyor.

One example device for indicating the direction of movement of a passenger conveyor, designed according to this invention, includes a display that is adapted to be placed beneath a handrail near a landing at one end of the conveyor. The display is visible to an individual approaching the end of the conveyor.

In one example, the display is supported on a handrail entry module that includes at least one surface that is at least partially at an oblique angle relative to the landing. The display is supported on the obliquely oriented surface to maximize the visibility of the display to a wider variety of approaching passengers.

One example arrangement includes a controller that controls the contents of the display automatically to correspond to a direction of movement of the conveyor. In one example the controller uses information regarding a direction of movement of a motor that is associated with the passenger conveyor to propel the steps in a desired direction.

The various features and advantages of this invention will become apparent to those skilled in the art from the following detailed description of the currently preferred embodiment. The drawings that accompany the detailed description can be briefly described as follows.

### BRIEF DESCRIPTION OF THE DRAWINGS

Figure 1 schematically illustrates a passenger conveyor system incorporating a display designed according to an embodiment of this invention.
Figure 2 diagrammatically illustrates an example display arrangement designed according to an embodiment of this invention.

### DETAILED DESCRIPTION OF THE PREFERRED EMBODIMENT

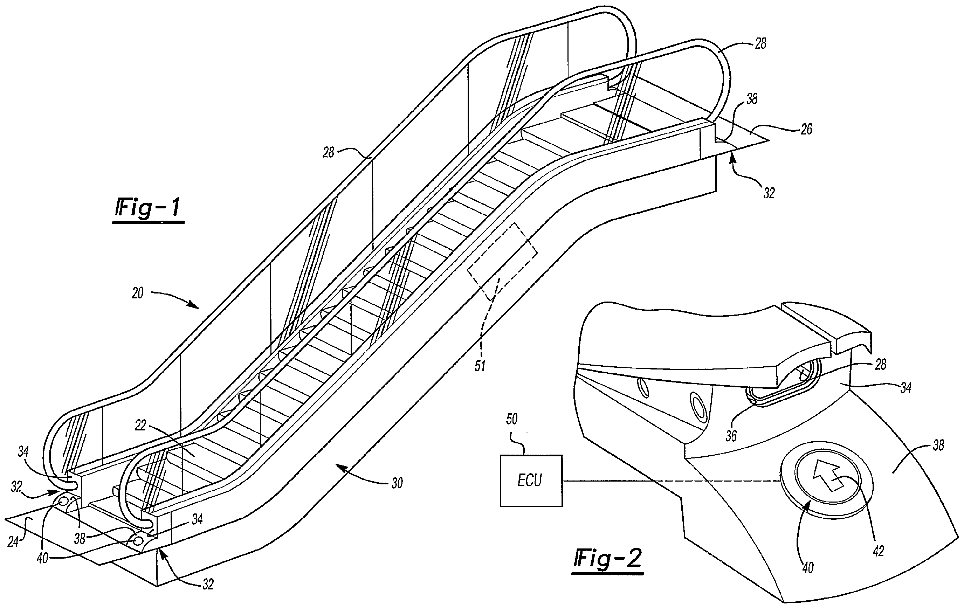

As shown in Figure 1, a passenger conveyor 20 includes a plurality of steps 22 that move in a selected direction between landings 24 and 26. The illustrated conveyor is as escalator, however, this invention is not limited only to escalators. Moving walkways and other types of passenger conveyors are within the scope of this invention.

The steps 22 move in a conventional manner to carry passengers between the landings 24 and 26, which are at opposite ends of the escalator. A handrail 28 moves in a conventional fashion with the steps 22 to provide a handle to stabilize passengers on the escalator. A conventional escalator support structure 30 at least partially covers over some of the operating components of the escalator system in a conventional manner.

Handrail entry modules 32 are positioned on opposite sides of the steps at each landing. In this example, each module 32 includes a generally vertical surface 34 having an opening 36, which provides the handrail entry. A support surface 38 extends generally down and out from the vertical surface 34 between the corresponding landing and the vertical surface. In the illustrated example, the surface 38 is at least partially arranged at an oblique angle relative to the landing. In the particular examples of Figures 2 and 3, the surface 38 is rounded or at least partially curvilinear. The position angles and shapes of the surfaces 34 and 36 can be varied to meet the needs of a particular situation. Given this description, those skilled in the art will be able to select what provides them an intended result.

A display 40 is supported by the module 32 and in this example is generally aligned with the support surface 38. The display 40 provides a visible indication of the direction of traffic flow of the escalator. A variety of indicators may be provided on the display 40, depending on the selection of equipment to provide the display. One example indicator is an arrow pointing in the direction of traffic flow. Another example indicator is the word "UP" or the word "DOWN" indicating a direction of escalator traffic flow. Other example indicators useful with a display designed according to this invention include a stop sign, a symbol indicating "no entry," a symbol indicating that an individual is entering a one-way street in the wrong direction or an "X" indicating that an escalator is not properly working and the steps are not moving. Those skilled in the art who have the benefit of this description will be able to select the appropriate display contents to meet the needs of their particular situation.

Referring to Figure 2, a display panel 42 provides the visible indication of the traffic flow direction. In one example, the display panel 42 includes lights that are selectively powered to provide the desired traffic flow indication. LED's are used in one example. Another example includes a liquid crystal display panel. A variety of commercially available displays can be incorporated into a device designed according to this invention. Given this description, those skilled in the art will be able to select appropriate components to meet the needs of their particular situation.

Although the illustrated example includes the display 40 as part of the handrail entry module 32, this invention is not necessarily limited to such an integrated arrangement. Other embodiments that place the display beneath the handrail near a landing are within the scope of this invention. In one example, the display is supported by a structural member that is part of the landing.

As schematically shown in Figure 2, an electronic control unit 50 controls the display 40. In one example, a dedicated microprocessor is provided to control the contents of the display 40. In another example, the controller 50 is part of a controller associated with the machine (i.e., motor and brake schematically shown at 51 in Figure 1) that is responsible for controlling the movement or operation of the escalator. The controller 50 sends appropriate signals to the display 40 so that the desired display is provided. The controller 50, for example, provides an indication of the traffic flow direction based upon information determined regarding movement of the motor.

One advantage of this invention is that it places the traffic flow indicator display 40 near the handrail entry point 36. Providing a display of traffic flow information beneath the handrail at the landing makes the indicator more readily visible to a wider variety of potential passengers. Such a display is more readily visible from a variety of angles and more readily interpreted as providing a direct indication of the direction of flow or movement of the steps 22. This invention allows for integrating a traffic flow display into an elevator system in a manner that is aesthetically pleasing and provides higher functionality than previous attempts.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A passenger conveyor (20) comprising:
a plurality of steps (22) that move along a selected path between two landings (24, 26);
a handrail (28) that moves with the steps (22);
a handrail entry module (28) that includes at least one surface (38) that is positioned beneath the handrail (28) near a corresponding one of the landings (24, 26) and that is at least partially at an oblique angle relative to the landing (24, 26); and
a display (40) providing an indication of a direction of movement of the steps (22);
**characterized in that**
the display (40) is associated with the surface (38) such that the display (40) is visible to an individual approaching the landing (24, 26).

2. The passenger conveyor (20) of claim 1, wherein the display (40) includes a display (40) screen supported on a surface that is at least partially at an oblique angle relative to the landing when the display (40) is placed beneath the handrail (28).

3. The passenger conveyor (20) of claim 1, wherein the display (40) comprises an electronic display panel (42).

4. The passenger conveyor (20) of claim 3, wherein the display (40) is lighted.

5. The passenger conveyor (20) of claim 3, wherein the display (40) comprises a liquid crystal display panel (42).

6. The passenger conveyor (20) of claim 1, including a controller (50) that controls an indicator on the display (40) and wherein the controller (50) automatically sets the indicator to correspond to a direction of movement of the conveyor (20).

7. The passenger conveyor (20) of claim 6, wherein the controller (50) uses information regarding a direction of movement of a motor of the conveyor (20) to determine the corresponding indicator.

8. The passenger conveyor (20) of claim 1, including a handrail entry module (32) having a generally vertical portion (34) that has an opening through which the handrail (28) passes and a support surface (38) extending generally down and away from the vertical portion (34) and wherein the display (40) is positioned on the support surface (38).

9. The passenger conveyor (20) of claim 8, wherein the support surface (38) is curved.

10. The passenger conveyor (20) of claim 1, including a handrail (28) on each side of the steps (22) and a display (40) beneath each handrail (28) near each landing (24, 26).

11. The passenger conveyor (20) of claim 1, wherein the support surface (38) is at least partially at an oblique angle relative to the landing (24, 26) and the display (40) is supported on the support surface (38).

12. The passenger conveyor (20) of claim 1, including a handrail (28) entry module (32) that includes a generally vertical portion (34) that has an opening (36) through which the handrail (28) passes and wherein the support surface (38) extends generally down and away from the vertical portion (34) and wherein the display (40) is positioned on the support surface (38).

13. The passenger conveyor (20) of claim 12, wherein the support surface (38) is curved.

14. The passenger conveyor (20) of claim 1, wherein the display (40) comprises an electrically powered indicator.

15. The passenger conveyor (20) of claim 14, wherein the display (40) is selectively at least partially lit to provide the indication of the direction of step movement.

16. The passenger conveyor (20) of claim 14, wherein the display (40) comprises a liquid crystal display (40) panel.

17. The passenger conveyor (20) of claim 1, including a controller (50) that controls the indication on the display (40) and wherein the controller (50) automatically sets the indication to correspond to a direction of movement of the steps (22).

18. The passenger conveyor (20) of claim 17, including a machine (51) that propels the steps (22) in a selected direction and wherein the controller (50) uses information regarding operation of the machine (51) to determine the corresponding indication.

19. The passenger conveyor (20) of claim 18, wherein the controller (50) controls operation of the machine (51) and the display (40).

## Patentansprüche

1. Passagierbeförderungseinrichtung (20), umfassend:
eine Mehrzahl von Stufen (22), die sich über einen ausgewählten Weg zwi - schen zwei Landestellen (24, 26) bewegen;
einen Handlauf (28), der sich mit den Stufen (22) bewegt;
ein Handlaufeintrittmodul (28), das wenigstens eine Fläche (38) aufweist, die unter dem Handlauf (28) nahe einer entsprechenden der Landestellen (24, 26) angeordnet ist und wenigstens teilweise in einem schrägen Winkel relativ zu der Landestelle (24, 26) ist; und
eine Anzeige (40), die eine Angabe einer Bewegungsrichtung der Stufen (22) bereitstellt;
**dadurch gekennzeichnet, dass**
die Anzeige (40) der Fläche (38) zugeordnet ist, derart, dass die Anzeige (40) für eine Person sichtbar ist, die sich dem Absatz (24, 26) nähert.

2. Passagierbeförderungseinrichtung (20) nach Anspruch 1, wobei die Anzeige (40) einen Anzeigebildschirm (40) aufweist, der auf einer Fläche gelagert ist, die wenigstens teilweise in einem schrägen Winkel relativ zu der Landestelle ist, wenn die Anzeige (40) unter dem Handlauf (28) angeordnet ist.

3. Passagierbeförderungseinrichtung (20) nach Anspruch 1, wobei die Anzeige (40) ein elektronisches Anzeigefeld (42) umfasst.

4. Passagierbeförderungseinrichtung (20) nach Anspruch 3, wobei die Anzeige (40) beleuchtet ist.

5. Passagierbeförderungseinrichtung (20) nach Anspruch 3, wobei die Anzeige (40) ein Flüssigkristallanzeigefeld (42) umfasst.

6. Passagierbeförderungseinrichtung (20) nach Anspruch 1, die eine Steuerein - richtung (50) aufweist, die einen Indikator an der Anzeige (40) steuert, und wobei die Steuereinrichtung (50) den Indikator automatisch derart einstellt, dass er einer Bewegungsrichtung der Beförderungseinrichtung (20) entspricht.

7. Passagierbeförderungseinrichtung (20) nach Anspruch 6, wobei die Steuer - einrichtung (50) Information zu einer Bewegungsrichtung eines Motors der Beförderungseinrichtung (20) verwendet, um den entsprechenden Indikator zu bestimmen.

8. Passagierbeförderungseinrichtung (20) nach Anspruch 1, die ein Handlaufeintrittmodul (32) mit einem allgemein vertikalen Abschnitt (34) aufweist, der eine Öffnung, durch die der Handlauf (28) verläuft, und eine Trägerfläche (38) aufweist, die sich von dem vertikalen Abschnitt (34) allgemein nach unten und von diesem weg erstreckt, und wobei die Anzeige (40) auf der Trägerfläche (38) angeordnet ist.

9. Passagierbeförderungseinrichtung (20) nach Anspruch 8, wobei die Trägerfläche (38) gekrümmt ist.

10. Passagierbeförderungseinrichtung (20) nach Anspruch 1, die einen Handlauf (28) auf jeder Seite der Stufen (22) und eine Anzeige (40) unter jedem Handlauf (28) nahe jedem Absatz (24, 26) aufweist.

11. Passagierbeförderungseinrichtung (20) nach Anspruch 1, wobei die Trägerfläche (38) wenigstens teilweise in einem schrägen Winkel relativ zu der Landestelle (24, 26) ist und die Anzeige (40) auf der Trägerfläche (38) gelagert ist.

12. Passagierbeförderungseinrichtung (20) nach Anspruch 1, die ein Eintrittmodul (32) des Handlaufs (28) mit einem allgemein vertikalen Abschnitt (34) aufweist, der eine Öffnung (36) aufweist, durch die der Handlauf (28) verläuft, und wobei sich die Trägerfläche (38) von dem vertikalen Abschnitt (34) allgemein nach unten und davon weg erstreckt, und wobei die Anzeige (40) auf der Trägerfläche (38) angeordnet ist.

13. Passagierbeförderungseinrichtung (20) nach Anspruch 12, wobei die Trägerfläche (38) gekrümmt ist.

14. Passagierbeförderungseinrichtung (20) nach Anspruch 1, wobei die Anzeige (40) einen elektrisch betriebenen Indikator umfasst.

15. Passagierbeförderungseinrichtung (20) nach Anspruch 14, wobei die Anzeige (40) selektiv wenigstens teilweise beleuchtet ist, um die Angabe der Stufenbewegungsrichtung bereitzustellen.

16. Passagierbeförderungseinrichtung (20) nach Anspruch 14, wobei die Anzeige (40) ein Feld einer Flüssigkristallanzeige (40) umfasst.

17. Passagierbeförderungseinrichtung (20) nach Anspruch 1, die eine Steuereinrichtung (50) aufweist, die eine Angabe an der Anzeige (40) steuert, und wobei die Steuereinrichtung (50) die Angabe automatisch derart einstellt, dass sie einer Bewegungsrichtung der Stufen (22) entspricht.

18. Passagierbeförderungseinrichtung (20) nach Anspruch 17, die eine Maschine (51) aufweist, die die Stufen (22) in eine ausgewählte Richtung antreibt und wobei die Steuereinrichtung (50) Informationen zum Betrieb der Maschine (51) verwendet, um die entsprechende Angabe zu bestimmen.

19. Passagierbeförderungseinrichtung (20) nach Anspruch 18, wobei die Steuereinrichtung (50) den Betrieb der Maschine (51) und der Anzeige (40) steuert.

## Revendications

1. Tapis roulant (20) comprenant :
une pluralité de marches (22) qui se déplace le long d'une voie sélectionnée entre deux paliers (24, 26) ;
une main-courante (28) qui se déplace avec les marches (22) ;
un module d'entrée de main-courante (28) qui inclut au moins une surface (38) qui est positionnée sous la main-courante (28) près d'un palier correspondant des paliers (24, 26) et qui est au moins partiellement selon un angle oblique par rapport au palier (24, 26) ; et
un écran (40) fournissant une indication d'une direction de mouvement des marches (22) ;
**caractérisé en ce que**
l'écran (40) est associé à la surface (38) de sorte que l'écran (40) soit visible à un individu approchant le palier (24, 26).

2. Tapis roulant (20) selon la revendication 1, dans lequel l'écran (40) inclut un écran (40) supporté sur une surface qui est au moins partiellement selon un angle oblique par rapport au palier lorsque l'écran (40) est placé sous la main-courante (28).

3. Tapis roulant (20) selon la revendication 1, dans lequel l'écran (40) comprend un panneau d'affichage électronique (42).

4. Tapis roulant (20) selon la revendication 3, dans lequel l'écran (40) est éclairé.

5. Tapis roulant (20) selon la revendication 3, dans lequel l'écran (40) comprend un panneau d'affichage à cristaux liquides (42).

6. Tapis roulant (20) selon la revendication 1, incluant un contrôleur (50) qui commande un indicateur sur l'écran (40) et dans lequel le contrôleur (50) règle automatiquement l'indicateur pour correspondre à une direction de mouvement du tapis (20).

7. Tapis roulant (20) selon la revendication 6, dans lequel le contrôleur (50) utilise des informations concernant une direction de mouvement d'un moteur du tapis (20) pour déterminer l'indicateur correspondant.

8. Tapis roulant (20) selon la revendication 1, incluant un module d'entrée de main-courante (32) présentant une partie généralement verticale (34) qui a une ouverture par laquelle la main-courante (28) passe et une surface de support (38) s'étendant généralement vers le bas et loin de la partie verticale (34) et dans lequel l'écran (40) est positionné sur la surface de support (38).

9. Tapis roulant (20) selon la revendication 8, dans lequel la surface de support (38) est courbée.

10. Tapis roulant (20) selon la revendication 1, incluant une main-courante (28) sur chaque côté des marches (22) et un écran (40) sous chaque main-courante (28) près de chaque palier (24, 26).

11. Tapis roulant (20) selon la revendication 1, dans lequel la surface de support (38) est au moins partiellement selon un angle oblique par rapport au palier (24, 26) et l'écran (40) est supporté sur la surface de support (38).

12. Tapis roulant (20) selon la revendication 1, incluant un module (32) d'entrée de main-courante (28) qui inclut une partie généralement verticale (34) qui présente une ouverture (36) par laquelle la main-courante (28) passe et dans lequel la surface de support (38) s'étend généralement vers le bas et loin de la partie verticale (34) et dans lequel l'écran (40) est positionné sur la surface de support (38).

13. Tapis roulant (20) selon la revendication 12, dans lequel la surface de support (38) est courbée.

14. Tapis roulant (20) selon la revendication 1, dans lequel l'écran (40) comprend un indicateur à alimentation électrique.

15. Tapis roulant (20) selon la revendication 14, dans lequel l'écran (40) est au moins partiellement éclairé sélectivement pour fournir l'indication de la direction du mouvement de marche.

16. Tapis roulant (20) selon la revendication 14, dans lequel l'écran (40) comprend un panneau d'affichage (40) à cristaux liquides.

17. Tapis roulant (20) selon la revendication 1, incluant un contrôleur (50) qui commande l'indication sur l'écran (40) et dans lequel le contrôleur (50) règle automatiquement l'indication pour correspondre à une direction de mouvement des marches (22).

18. Tapis roulant (20) selon la revendication 17, incluant une machine (51) qui propulse les marches (22) dans une direction sélectionnée et dans lequel le contrôleur (50) utilise des informations concernant le fonctionnement de la machine (51) pour déterminer l'indication correspondante.

19. Tapis roulant (20) selon la revendication 18, dans lequel le contrôleur (50) commande le fonctionnement de la machine (51) et de l'écran (40).
